# EUROPEAN PATENT APPLICATION

(11) **EP 4 807 817 A1**
(43) Date of publication of application: **16.09.2026**
(21) Application number: 25866183.4
(22) Date of filing: 12.09.2025
(51) Int. Cl.: H01M 4/62, H01M 4/13, H01M 4/02

(54) **CONDUCTIVE MATERIAL DISPERSION AND PREPARATION METHOD THEREFOR**

(30) Priority: 13.09.2024 KR 20240125403; 11.09.2025 KR 20250129592
(71) Applicant: LG Chem, Ltd., Seoul 07336 (KR)
(72) Inventor: JANG, Youngjin, Seoul 07796 (KR); KIM, Eunbum, Seoul 07796 (KR); CHO, Seung Wook, Seoul 07796 (KR); YOON, Kiyoul, Seoul 07796 (KR)
(74) Representative: Hoffmann Eitle
(86) International application number: PCT/KR2025/014207
(87) International publication number: WO 2026/059350

(57) **Abstract**

There is provided a conductor dispersed solution comprising a carbon-based conductor, a first dispersant comprising a vinyl-based polymer containing aromatic halogen atoms, a second dispersant comprising a cationic compound having a thiazine structure, and a dispersion medium, and a method of preparing same. By including both the first dispersant and the second dispersant in the conductor dispersed solution, the carbon-based conductor can be uniformly and effectively dispersed therein, so that the dispersed solution may exhibit a relatively low viscosity and a small change in viscosity over time.

## Description

### [Technical Field]

This application claims the benefit of priority to Korean Patent Application No. 10-2024-0125403, filed September 13, 2024, and Korean Patent Application No. 10-2025-0129592, filed September 11, 2025, the disclosures of which are incorporated herein by reference in their entirety.

The present invention relates to a conductor dispersed solution and a method of preparing same. Specifically, the present invention relates to a conductor dispersed solution comprising a first dispersant comprising a vinyl-based polymer containing halogen atoms and a second dispersant comprising a cationic compound containing a thiazine structure, and a method for preparing same.

### [Related Art]

As the technology development and demand for mobile devices increase, the demand for secondary batteries as power sources is growing rapidly. Among these secondary batteries, lithium secondary batteries with high energy density and voltage, long cycle life, and low self-discharge rate are commercially available and widely used. As an electrode for these high-capacity lithium secondary batteries, research is underway on the method of improving electrode density to produce an electrode with higher energy density per unit volume.

In general, a high-density electrode is formed by molding electrode active material particles having a size of several micrometers to several tens of micrometers using a high-pressure press. During the molding process, the particles may be deformed and the space between the particles may be reduced, which can lead to decreased electrolyte permeability.

In order to solve these problems, the electrodes are being manufactured using conductors with excellent electrical conductivity and strength. The conductor, positioned between the electrode active materials, can maintain the micropores between the active material particles even during the molding process, thereby facilitating easy penetration of the electrolyte, and can reduce the resistance in the electrode due to its electrical conductivity.

A variety of materials can be used as the conductor, among which the use of carbon black or carbon nanotubes has been increasing. If the conductor is introduced into the electrode slurry in a powder state, the conductor is not uniformly dispersed, resulting in a decrease in the conductivity of the manufactured electrode. In particular, carbon nanotubes, a type of fine carbon fiber, are expected to be applied and commercialized in various fields due to their high conductivity, tensile strength, and heat resistance, but they have low dispersibility and tend to agglomerate because of strong van der Waals forces between each other resulting from their high specific surface area.

To address these issues, various methods are being used to mix the conductor and dispersant, such as jets, mills, and high pressure homogenizers, and to increase the process time. However, these methods lead to higher process costs and increased process times. In addition, such mechanical dispersion methods can lead to agglomeration of the conductor as the process ends.

Therefore, it is necessary to develop a dispersant with excellent dispersibility and a method for preparing a conductor dispersed solution with excellent dispersibility by effectively reducing the viscosity of the dispersed solution while improving the dispersibility of the conductor and suppressing the increase in viscosity over time.

### [Prior Art Reference]

### [Patent Reference]

(Patent Reference 1) Japanese Laid-open Patent Publication No. 2003-535185

### [Detailed Description of the Invention]

### [Technical Problem]

It is an object of the present invention to provide a conductor dispersed solution comprising a carbon-based conductor, a first dispersant comprising a vinyl-based polymer comprising halogen atoms, a second dispersant comprising a cationic compound comprising a thiazine structure, and a dispersion medium, which reduces the viscosity of the dispersed solution and suppresses the increase in viscosity over time, resulting in improved dispersibility.

Another object of the present invention is to provide a method of preparing the conductor dispersed solution.

### [Technical Solution]

The first aspect of the present invention provides a conductor dispersed solution comprising a carbon-based conductor, a first dispersant comprising a vinyl-based polymer comprising halogen atoms, a second dispersant comprising a cationic compound comprising a thiazine structure, and a dispersion medium.

In one example of the present invention, the cationic compound is represented by any of the following Chemical formulae 1 and 2.

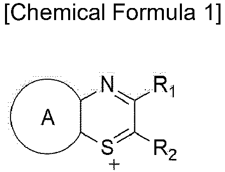

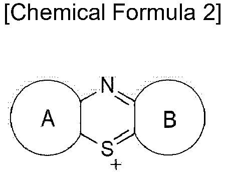

In chemical formulae 1 and 2, rings A and B are be the same or different from each other, each independently selected from the group consisting of substituted or unsubstituted aryl groups having 6 to 20 carbon atoms, and substituted or unsubstituted heteroaryl groups having 6 to 20 carbon atoms, R₁ and R₂ are the same or different from each other, each independently selected from hydrogen; halogen; cyano groups; sulfonate groups; hydroxyl groups; amine groups; substituted or unsubstituted alkyl groups having 1 to 10 carbon atoms; substituted or unsubstituted alkenyl groups having 2 to 10 carbon atoms; substituted or unsubstituted alkynyl groups having 2 to 10 carbon atoms; substituted or unsubstituted alkoxy groups having 1 to 10 carbon atoms; substituted or unsubstituted aryl groups having 6 to 20 carbon atoms; substituted or unsubstituted alkylamine groups having 1 to 10 carbon atoms; substituted or unsubstituted alkenylamine groups having 2 to 10 carbon atoms; substituted or unsubstituted alkynylamine groups having 2 to 10 carbon atoms; and substituted or unsubstituted arylamine groups having 6 to 20 carbon atoms.

In one example of the present invention, the cationic compound is represented by Chemical Formula 3 below.

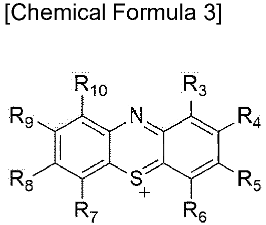

In Chemical Formula 3, R₃ to R₁₀ are the same or different from each other, each independently selected from hydrogen; halogen; cyano groups; sulfonate groups; hydroxyl groups; amine groups; substituted or unsubstituted alkyl groups having 1 to 10 carbon atoms; substituted or unsubstituted alkenyl groups having 2 to 10 carbon atoms; substituted or unsubstituted alkynyl groups having 2 to 10 carbon atoms; substituted or unsubstituted alkoxy groups having 1 to 10 carbon atoms; substituted or unsubstituted aryl groups having 6 to 20 carbon atoms; substituted or unsubstituted alkylamine groups having 1 to 10 carbon atoms; substituted or unsubstituted alkenylamine groups having 2 to 10 carbon atoms; substituted or unsubstituted alkynylamine groups having 2 to 10 carbon atoms; and substituted or unsubstituted arylamine groups having 6 to 20 carbon atoms.

In one example of the present invention, the compound represented by any of the above chemical formulae 1 and 2 comprises at least one amine group, wherein the amine group is substituted at a position where a positive charge located on the sulfur (S) atom in a resonance structure of the compound can be located on the nitrogen atom of the amine group.

In one example of the present invention, the content of the conductor in the dispersed solution is 0.05% by weight to 5% by weight based on the total weight of the dispersed solution.

In one example of the present invention, the content of the first dispersant in the dispersed solution is 80 parts by weight to 450 parts by weight based on 100 parts by weight of the conductor.

In one example of the present invention, the content of the second dispersant in the dispersed solution is 10 parts by weight to 150 parts by weight based on 100 parts by weight of the conductor.

In one example of the present invention, the content of the second dispersant in the dispersed solution is 10 parts by weight to 90 parts by weight based on 100 parts by weight of the first dispersant.

In one example of the present invention, the conductor dispersed solution has an initial viscosity of 1 Pa·s to 12 Pa·s as measured at 25°C, 1 rpm.

In one example of the present invention, the conductor dispersed solution has a viscosity increase rate of 0.1% to 18%, represented by the following formula (1). $Viscosity increase rate \left(%\right) = \left[\left\{P-Q\right\}/Q\right] \times 100 ,$ wherein P is the viscosity (Pa·s) measured after leaving the dispersed solution at 25°C for 1 week, Q is the initial viscosity (Pa·s), and both P and Q are measured at 25°C, 1 rpm.

In one example of the present invention, the conductor comprises a material selected from the group consisting of carbon nanotubes, carbon black, and a combination thereof.

In one example of the present invention, the vinyl-based polymer comprising halogen atoms is selected from the group consisting of polyvinyl fluoride, polyvinylidene fluoride, polyvinylidene fluoride-hexafluoropropylene copolymer, polytetrafluoroethylene, polyethylene tetrafluoroethylene, polychlorotrifluoroethylene, polyethylene chlorotrifluoroethylene, polyvinyl chloride, and combinations thereof.

In one example of the present invention, the dispersion medium comprises a nonaqueous polar solvent.

A second aspect of the present invention provides a method of preparing a conductor dispersed solution comprising (1) mixing a carbon-based conductor, a first dispersant, a second dispersant, and a dispersion medium to prepare a primary dispersed solution of the conductor; and (2) dispersing the primary dispersed solution of the conductor to prepare a secondary dispersed solution of the conductor.

In one example of the present invention, the step (2) comprises a high-pressure dispersion process.

### [Advantageous Effects]

The conductor dispersed solution according to the present invention includes a first dispersant comprising a vinyl-based polymer comprising halogen atoms and a second dispersant comprising a cationic compound comprising a thiazine structure, so that the carbon-based conductor is uniformly and effectively dispersed in the conductor dispersed solution, resulting in a relatively low viscosity and a small change in viscosity over time of the dispersion.

Furthermore, by utilizing the conductor dispersed solution of the present invention in an electrode slurry composition, electrodes and secondary batteries having excellent capacity characteristics and cycling characteristics can be prepared.

### [Best Mode]

Hereinafter, the present invention will be described in more detail.

The terms and words used in this specification and claims are not to be construed in their ordinary or dictionary sense, but rather in a sense and concept consistent with the technical idea of the present invention, based on the principle that the inventor may define the terms appropriately in order to best explain his/her invention. Accordingly, it is to be understood that the configurations described in the examples described herein are only the most preferred examples of the present invention and do not represent all of the technical ideas of the invention, and that there may be various equivalents and variations that may be substituted for them at the time of the application.

In this specification, when a certain part "comprise(s)" a certain component, it means that, unless otherwise explicitly stated, the part may further include other components rather than excluding them.

As used herein, the term "substitution" means the replacement of a hydrogen atom bonded to a carbon atom of a compound with another substituent, and the position to be substituted is not particularly limited as long as the hydrogen atom can be substituted, i.e., as long as the substituent is capable of being introduced at this position. Also, if there are two or more substituents, these two or more substituents may be the same or different from each other.

As used herein, "substituted or unsubstituted" means being unsubstituted or substituted with one or more substituents selected from the group consisting of hydrogen; halogen; cyano groups; sulfonate groups; hydroxyl groups; amine groups; straight or branched alkyl groups having 1 to 10 carbon atoms; straight or branched alkenyl groups having 2 to 10 carbon atoms; straight or branched alkynyl groups having 2 to 10 carbon atoms; monocyclic or polycyclic cycloalkyl groups having 3 to 10 carbon atoms; monocyclic or polycyclic aryl groups having 6 to 20 carbon atoms; monocyclic or polycyclic heteroaryl groups having 2 to 20 carbon atoms; monocyclic or polycyclic heterocycloalkyl groups having 2 to 10 carbon atoms; alkylamine groups having 1 to 10 carbon atoms; alkenylamine groups having 2 to 10 carbon atoms; alkynylamine groups having 2 to 10 carbon atoms; monocyclic or polycyclic arylamine groups having 6 to 20 carbon atoms; and monocyclic or polycyclic heteroarylamine groups having 2 to 20 carbon atoms, or being unsubstituted or substituted with a substituent linked to two or more substituents selected from the substituents exemplified above.

As used herein, "Cn1 to Cn2" means having a carbon number of n1 to n2 in the functional group.

In this specification, "alkyl" means a straight or branched saturated hydrocarbon containing a single radical, wherein the single radical is a functional group that determines the bonding position, and the bonding position is not particularly limited. Examples of the term "alkyl" include, but are not necessarily limited to, methyl, ethyl, n-propyl, i-propyl, n-butyl, i-butyl, t-butyl, n-pentyl, i-pentyl, and hexyl.

As used herein, "alkenyl" means a straight or branched hydrocarbon having one or more carbon-carbon double bonds, containing a single radical, wherein the single radical is a functional group that determines the bonding position, and the bonding position is not particularly limited. Examples of the term "alkenyl" include, but are not necessarily limited to, ethenyl and propenyl.

As used herein, "alkynyl" means a straight or branched hydrocarbon having one or more carbon-carbon triple bonds, containing a single radical, wherein the single radical is a functional group that determines the bonding position, and the bonding position is not particularly limited. Examples of the term "alkynyl" include, but are not necessarily limited to, ethynyl and propynyl.

As used herein, "halogen" means fluorine (F), chlorine (Cl), bromine (Br), or iodine (I).

As used herein, "aryl" means an aromatic cyclic hydrocarbon having one or more rings, containing a single radical, wherein the single radical is a functional group that determines the bonding position, and the bonding position is not particularly limited. Examples of the term "aryl" include, but are not necessarily limited to, phenyl and naphthyl. As used herein, the term "aryl ring" may be used to refer to an aromatic cyclic hydrocarbon that does not include a separate radical.

As used herein, "heteroaryl" means an aromatic cyclic hydrocarbon having one or more rings, containing a single radical, and having one or more hetero elements in the ring, wherein the single radical is a functional group that determines the bonding position, and the bonding position is not particularly limited. The hetero element may be capable of forming a ring, e.g., O, N, and S. Examples of the term "heteroaryl" include, but are not necessarily limited to, pyrrolyl, furanyl, and pyrazinyl. As used herein, the term "heteroaryl ring" may be used to refer to an aromatic cyclic hydrocarbon having a hetero element that does not include a separate radical.

As used herein, the term "alkoxy" means a functional group in the form of -ORa where Ra is the alkyl as described above. Examples of the term "alkoxy" include, but are not necessarily limited to, methoxy, difluoromethoxy, trifluoromethoxy, ethoxy, n-propoxy, isopropoxy, n-butoxy, and t-butoxy.

As used herein, the term "hydroxyl" refers to a functional group in the form of -OH.

As used herein, the term "sulfonate" refers to a functional group in the form of -SO3H.

As used herein, the term "cyano" refers to a functional group in the form of -CN.

As used herein, the term "amine" means a functional group in the form including -NH2, - N(R)H, -N(R)2, -L-NH2, -L-N(R)H, and -L-N(R)2, wherein R may be alkyl, alkenyl, alkynyl, aryl, or heteroaryl, and L may be alkylene, alkenylene, or alkynylene.

As used herein, the unit "%" means "% by weight" unless otherwise explicitly indicated.

In this specification, the "specific surface area" is measured by the BET method (Brunauer-Emmett-Teller Analysis), which can be calculated from the amount of nitrogen gas adsorbed at a liquid nitrogen temperature (77 K) using the BELSORP-mino II manufactured by BEL Japan.

Hereinafter, the present invention will be described in detail.

### Conductor dispersed solution

A conductor dispersed solution according to the present invention comprises a carbon-based conductor, a dispersant, and a dispersion medium.

The conductor dispersed solution may be for forming an electrode, and more specifically, for forming a positive electrode.

Hereinafter, each component of the conductor dispersed solution of the present invention will be described in detail.

### (1) Carbon-based conductor

In one example of the present invention, the carbon-based conductor comprises carbon nanotubes.

The carbon nanotube may be a secondary structure formed by aggregation of unit carbon nanotubes into a bundle structure in whole or in part, wherein the unit carbon nanotube has a graphite sheet having a cylindrical shape with a nano-sized diameter and a sp²-bonded structure. The graphite sheet may exhibit electrical characteristics of a conductor or a semiconductor depending on the rolling angle and the structure thereof. The unit carbon nanotubes can be categorized into single-walled carbon nanotubes (SWCNTs), double-walled carbon nanotubes (DWCNTs), and multi-walled carbon nanotubes (MWCNTs) based on the number of bonds that constitute their walls.

The carbon nanotubes according to one example of the present invention may include one or more of single-walled, double-walled, and multi-walled carbon nanotubes, but are not limited thereto, and may specifically include single-walled carbon nanotubes.

In one example of the present invention, the average diameter of the carbon nanotubes is 0.6 nm to 10 nm. Specifically, the average diameter may be 0.8 nm or more, 0.9 nm or more, 1.0 nm or more, 1.1 nm or more, 1.2 nm or more, 1.3 nm or more, 1.4 nm or more, 1.5 nm or more, 1.6 nm or more, 1.7 nm or more, 1.8 nm or more, or 1.9 nm or more, may be 3.0 nm or less, 2.9 nm or less, 2.8 nm or less, 2.7 nm or less, 2.6 nm or less, 2.5 nm or less, 2.4 nm or less, 2.3 nm or less, 2.2 nm or less, 2.1 nm or less, or 2.0 nm or less, or may be 0.6 nm to 10 nm, 0.8 nm to 5 nm, or 0.8 nm to 3 nm.

In one example of the present invention, the carbon nanotubes have an average length of 0.5 µm to 20 µm. Specifically, the average length may be 5 µm or more, 7 µm or more, 9 µm or more, 11 µm or more, or 13 µm or more, may be 20 µm or less, 18 µm or less, 16 µm or less, or 14 µm or less, or may be 0.5 µm to 20 µm, 1 µm to 20 µm, or 5 µm to 20 µm.

If the average diameter and average length of the carbon nanotubes satisfy the above ranges, it is effective in reducing the viscosity of the dispersed solution and improving the storage stability, and excellent cycling characteristics can be realized in the application of an electrode active material. In this case, the average diameter of the carbon nanotubes may be determined from SEM images of the carbon nanotube powder, and the average length of the carbon nanotubes may be determined from SEM images of the carbon nanotube dispersion.

In one example of the present invention, the BET specific surface area of the carbon nanotubes is greater than or equal to 400 m²/g. Specifically, the specific surface area is 400 m²/g or more, 500 m²/g or more, 600 m²/g or more, 700 m²/g or more, 800 m²/g or more, 900 m²/g or more, 1,000 m²/g or more, 1,100 m²/g or more, 1,200 m²/g or more, 1,300 m²/g or more, or 1,400 m²/g or more, may be 2,000 m²/g or less, 1,900 m²/g or less, 1,800 m²/g or less, 1,700 m²/g or less, 1,600 m²/g or less, or 1,500 m²/g or less, or may be 400 m²/g to 5,000 m²/g, 800 m²/g to 3,000 m²/g, or 800 m²/g to 2,000 m²/g. The use of carbon nanotubes having a high BET specific surface area as described above enables effective formation of a conductive network between the electrode active materials, thereby improving the cycle characteristics of the secondary battery.

In one example of the present invention, the content of the conductor in the dispersed solution is 0.05% by weight to 5% by weight based on the total weight of the dispersed solution. Specifically, the content of the conductor may be 0.05% by weight or more, 0.1% by weight or more, 0.2% by weight or more, 0.3% by weight or more, 0.4% by weight or more, 0.5% by weight or more, 0.6% by weight or more, 0.7% by weight or more, 0.8% by weight or more, 0.9% by weight or more, 1% by weight or more, 1.5% by weight or more, 2% by weight or more, or 2.5% by weight or more, may be 5% by weight or less, 4.5% by weight or less, 4% by weight or less, 3.5% by weight or less, or 3% by weight% or less, or may be 0.05% by weight to 5% by weight, 0.2% by weight to 3% by weight, or 0.5% by weight to 2% by weight. When the content of the conductor satisfies the above ranges, high productivity is maintained while facilitating the transfer and introduction of the electrode slurry. In addition, the solids in the electrode slurry prepared are not excessively low, which can inhibit the occurrence of binder migration during electrode drying. As a result, electrode adhesion can be improved, and the packing of the electrode active material layer can be effectively achieved, thereby enabling the manufacture of an electrode having a reduced thickness.

In one example of the present invention, the carbon-based conductor comprises one or more selected from the group consisting of carbon nanotubes; carbon black; and a combination thereof.

A conductor dispersed solution according to one example of the present invention has a uniform dispersion of the conductor, so that it can have a relatively high conductor content. When a conductor dispersed solution with a low conductor content is used for the preparation of the electrode slurry, the solid content of the prepared electrode slurry is reduced. As a result, the thickness before applying and drying the electrode slurry (wet thickness) increases, and the calendering ratio measured after drying and calendering becomes higher, leading to a larger difference in the thickness ratio before and after calendering. As such, higher calendering ratio may damage the compositions in the slurry, including the positive electrode active material, during the process, resulting in poor battery performance.

### (2) Dispersant

In one example of the present invention, the conductor dispersed solution comprises a first dispersant comprising a vinyl-based polymer comprising halogen atoms and a second dispersant comprising a cationic compound comprising a thiazine structure to improve the dispersibility of the carbon-based conductor.

The first dispersant and the second dispersant play a role in increasing the dispersibility of the carbon-based conductor so that the carbon-based conductor can be evenly dispersed without agglomeration in the dispersed solution, and in particular, they can suppress the viscosity change of the carbon nanotube dispersion over time.

The first dispersant is a vinyl-based polymer comprising halogen atoms, which is not particularly limited as long as it is soluble in the dispersion medium in the conductor dispersed solution according to the present invention.

In one example of the present invention, the vinyl-based polymer comprising halogen atoms is selected from the group consisting of polyvinyl fluoride, polyvinylidene fluoride, polyvinylidene fluoride-hexafluoropropylene copolymer, polytetrafluoroethylene, polyethylene tetrafluoroethylene, polychlorotrifluoroethylene, polyethylene chlorotrifluoroethylene, polyvinyl chloride, and combinations thereof.

In one example of the present invention, the content of the first dispersant in the dispersed solution is 80 parts by weight to 450 parts by weight based on 100 parts by weight of the conductor. Specifically, the content of the first dispersant may be 80 parts by weight or more, 100 parts by weight or more, 150 parts by weight or more, or 200 parts by weight or more, may be 450 parts by weight or less, 400 parts by weight or less, 350 parts by weight or less, 300 parts by weight or less, or 250 parts by weight or less, or may be 80 parts by weight to 450 parts by weight, 80 parts by weight to 300 parts by weight, or 100 parts by weight to 200 parts by weight. If the content of the first dispersant satisfies the above ranges, the dispersibility of the solids in the dispersed solution is appropriately maintained so that the dispersed solution has a low viscosity.

The conductor dispersed solution according to one example of the present invention includes a second dispersant comprising a cationic compound having a thiazine structure to solve the problem that in the conductor dispersed solution containing only the first dispersant, as the content of the conductor increases, the viscosity of the dispersed solution increases, and thus exhibits superior dispersibility compared to the conductor dispersed solution containing only the first dispersant according to the prior art, resulting in reduced particle aggregation and a low sedimentation rate in the slurry composition.

As the second dispersant comprises a cationic compound having a thiazine structure, the molecular weight of the second dispersant is relatively low and the molecular size is small, whereby the second dispersant can be adsorbed onto the conductor not covered by the first dispersant, thereby producing an additional dispersion effect. The thiazine structure contained in the cationic compound can stably generate π-π interactions with the conductor, especially the carbon nanotubes, in a localized region, thereby providing sufficient binding between the dispersant and the conductor to reduce the excess dispersant content that is not effectively adsorbed on the surface of the conductor, thereby preventing aggregation in the residual dispersant. Furthermore, as the second dispersant comprises a cationic compound, it generates electrostatic repulsion between ions in the dispersed solution, preventing aggregation between adjacent dispersants, allowing the "conductor-dispersant" complex to remain stably dispersed in the dispersed solution.

In one example of the present invention, the cationic compound has 1 to 4 thiazine structures in the molecular structure. Specifically, the number of thiazine structures may be 1 to 4, 1 to 3, 1 to 2, or 1. When the number of thiazine structures in the compound structure satisfies the above ranges, it may form π-π interactions appropriate for the dispersion of the conductor, thereby reducing the viscosity of the dispersed solution and the increase in viscosity over time.

In one example of the present invention, the cationic compound is monovalent to tetravalent cationic. Specifically, the compound may be monovalent to tetravalent, monovalent to trivalent, monovalent to divalent, or monovalent cationic. When the compound satisfies the above ranges, the second dispersant comprising the above compound can be evenly mixed in the dispersed solution, and the "conductor-dispersant" complex can remain stably dispersed in the dispersed solution.

In one example of the present invention, the content of the second dispersant in the dispersed solution is 10 parts by weight to 150 parts by weight based on 100 parts by weight of the conductor. Specifically, the content of the second dispersant may be 10 parts by weight or more, 20 parts by weight or more, 30 parts by weight or more, 40 parts by weight or more, 50 parts by weight or more, 60 parts by weight or more, or 70 parts by weight or more, may be 150 parts by weight or less, 140 parts by weight or less, 130 parts by weight or less, 120 parts by weight or less, 110 parts by weight or less, 100 parts by weight or less, 90 parts by weight or less, or 80 parts by weight or less, or may be 10 parts by weight to 150 parts by weight, 30 parts by weight to 120 parts by weight, or 30 parts by weight to 100 parts by weight. When the content of the second dispersant satisfies the above ranges, the interactions between the dispersant and the dispersion medium, the dispersion medium and the conductor, and the dispersants can be formed smoothly, thereby exhibiting an effective dispersion of the conductor in the dispersed solution.

In one example of the present invention, the content of the second dispersant in the dispersed solution is 10 parts by weight to 90 parts by weight based on 100 parts by weight of the first dispersant. Specifically, the content of the second dispersant may be 10 parts by weight or more, 20 parts by weight or more, 30 parts by weight or more, 40 parts by weight or more, or 50 parts by weight or more, may be 90 parts by weight or less, 80 parts by weight or less, 70 parts by weight or less, or 60 parts by weight or less, or may be 10 to 90 parts by weight, 10 to 80 parts by weight, or 30 to 80 parts by weight. When the content of the second dispersant satisfies the above ranges, the dispersant is uniformly dispersed in the dispersed solution and can maintain the low viscosity at a constant level over time.

In one example of the present invention, the cationic compound having the thiazine structure of the second dispersant further comprises at least one amine group.

In one example of the present invention, the cationic compound is represented by any of the following Chemical formulae 1 and 2.

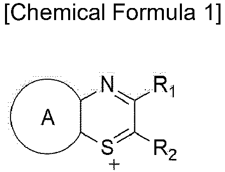

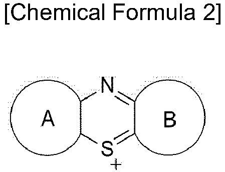

In chemical formulae 1 and 2, rings A and B are the same or different from each other, each independently selected from the group consisting of substituted or unsubstituted aryl groups having 6 to 20 carbon atoms, and substituted or unsubstituted heteroaryl groups having 6 to 20 carbon atoms.

In one example of the present invention, rings A and B are the same or different from each other, each independently selected from the group consisting of substituted or unsubstituted aryl groups having 6 to 10 carbon atoms, and substituted or unsubstituted heteroaryl groups having 6 to 10 carbon atoms.

In one example of the present invention, rings A and B are the same or different from each other, each independently selected from the group consisting of substituted or unsubstituted aryl groups having 6 to 10 carbon atoms.

In one example of the present invention, rings A and B are the same or different from each other, each independently selected from the group consisting of substituted or unsubstituted aryl groups having 6 carbon atoms.

In Chemical Formulae 1 and 2, R₁ and R₂ are the same or different from each other, each independently selected from hydrogen; halogen; cyano groups; sulfonate groups; hydroxyl groups; amine groups; substituted or unsubstituted alkyl groups having 1 to 10 carbon atoms; substituted or unsubstituted alkenyl groups having 2 to 10 carbon atoms; substituted or unsubstituted alkynyl groups having 2 to 10 carbon atoms; substituted or unsubstituted alkoxy groups having 1 to 10 carbon atoms; substituted or unsubstituted aryl groups having 6 to 20 carbon atoms; substituted or unsubstituted alkylamine groups having 1 to 10 carbon atoms; substituted or unsubstituted alkenylamine groups having 2 to 10 carbon atoms; substituted or unsubstituted alkynylamine groups having 2 to 10 carbon atoms; and substituted or unsubstituted arylamine groups having 6 to 20 carbon atoms.

In one example of the present invention, R₁ and R₂ are the same or different from each other, each independently selected from hydrogen; cyano groups; hydroxyl groups; amine groups; substituted or unsubstituted alkyl groups having 1 to 10 carbon atoms; substituted or unsubstituted alkenyl groups having 2 to 10 carbon atoms; substituted or unsubstituted alkynyl groups having 2 to 10 carbon atoms; substituted or unsubstituted aryl groups having 6 to 20 carbon atoms; substituted or unsubstituted alkylamine groups having 1 to 10 carbon atoms; substituted or unsubstituted alkenylamine groups having 2 to 10 carbon atoms; substituted or unsubstituted alkynylamine groups having 2 to 10 carbon atoms; and substituted or unsubstituted arylamine groups having 6 to 20 carbon atoms.

In one example of the present invention, R₁ and R₂ are the same or different from each other, each independently selected from hydrogen; amine groups; substituted or unsubstituted alkyl groups having 1 to 10 carbon atoms; substituted or unsubstituted alkenyl groups having 2 to 10 carbon atoms; substituted or unsubstituted alkynyl groups having 2 to 10 carbon atoms; substituted or unsubstituted aryl groups having 6 to 10 carbon atoms; substituted or unsubstituted alkylamine groups having 1 to 10 carbon atoms; substituted or unsubstituted alkenylamine groups having 2 to 10 carbon atoms; substituted or unsubstituted alkynylamine groups having 2 to 10 carbon atoms; and substituted or unsubstituted arylamine groups having 6 to 10 carbon atoms.

In one example of the present invention, R₁ and R₂ may be the same or different from each other, each independently selected from the group consisting of hydrogen; amine groups; substituted or unsubstituted alkyl groups having 1 to 10 carbon atoms, and substituted or unsubstituted alkylamine groups having 1 to 10 carbon atoms.

In one example of the present invention, the compound represented by any of the above chemical formulae 1 and 2 comprises at least one amine group, wherein the amine group is substituted at a position where a positive charge located on the sulfur (S) atom in a resonance structure of the compound can be located on the nitrogen atom of the amine group.

For example, the compound represented by Formula (A), which corresponds to Formula 1 below, may have a resonance structure that can also be represented by the structural formula in Formula (B) in addition to Formula (A), where the amine group represented in Formula (A) is substituted in such a way that the positive charge located on the sulfur (S) atom can be located on the nitrogen atom of the amine group, as in Formula (B).

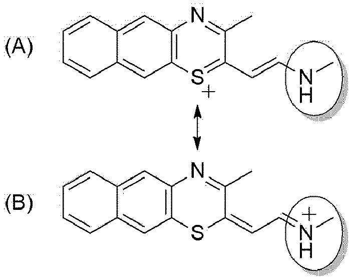

Similarly, the compound represented by Formula (C), which corresponds to Formula 1 below, may have a resonance structure that can also be represented by the structural formula in Formula (D) in addition to Formula (C), where the amine group represented in Formula (C) is substituted in such a way that the positive charge located on the sulfur (S) atom can be located on the nitrogen atom of the amine group, as in Formula (D).

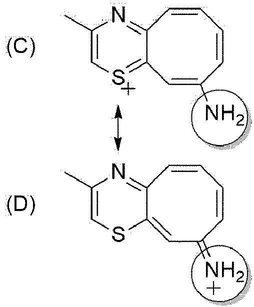

The amine group is not particularly limited as long as it is substituted in such a way that the positive charge located on the sulfur (S) atom can be located on the nitrogen atom of the amine group, and may be an amine group substituted with an alkyl group having 1 to 10 carbon atoms; an alkenyl group having 2 to 10 carbon atoms; an alkynyl group having 2 to 10 carbon atoms; an aryl group having 6 to 20 carbon atoms, as in Formula (A) above; or may be a substituted or unsubstituted alkylamine group having 1 to 10 carbon atoms; a substituted or unsubstituted alkenylamine group having 2 to 10 carbon atoms; a substituted or unsubstituted alkynylamine group having 2 to 10 carbon atoms; or a substituted or unsubstituted arylamine group having 6 to 20 carbon atoms, as in Formula (D) above.

In one example of the present invention, the cationic compound is represented by Chemical Formula 3 below.

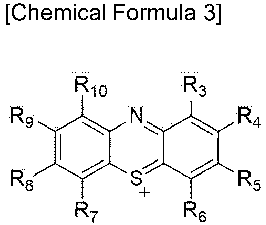

In Chemical Formula 3, R₃ to R₁₀ are the same or different from each other, each independently selected from hydrogen; halogen; cyano groups; sulfonate groups; hydroxyl groups; amine groups; substituted or unsubstituted alkyl groups having 1 to 10 carbon atoms; substituted or unsubstituted alkenyl groups having 2 to 10 carbon atoms; substituted or unsubstituted alkynyl groups having 2 to 10 carbon atoms; substituted or unsubstituted alkoxy groups having 1 to 10 carbon atoms; substituted or unsubstituted aryl groups having 6 to 20 carbon atoms; substituted or unsubstituted alkylamine groups having 1 to 10 carbon atoms; substituted or unsubstituted alkenylamine groups having 2 to 10 carbon atoms; substituted or unsubstituted alkynylamine groups having 2 to 10 carbon atoms; and substituted or unsubstituted arylamine groups having 6 to 20 carbon atoms.

In one example of the present invention, R₃ to R₁₀ are the same or different from each other, each independently selected from hydrogen; cyano groups; hydroxyl groups; amine groups; substituted or unsubstituted alkyl groups having 1 to 10 carbon atoms; substituted or unsubstituted alkenyl groups having 2 to 10 carbon atoms; substituted or unsubstituted alkynyl groups having 2 to 10 carbon atoms; substituted or unsubstituted aryl groups having 6 to 20 carbon atoms; substituted or unsubstituted alkylamine groups having 1 to 10 carbon atoms; substituted or unsubstituted alkenylamine groups having 2 to 10 carbon atoms; substituted or unsubstituted alkynylamine groups having 2 to 10 carbon atoms; and substituted or unsubstituted arylamine groups having 6 to 20 carbon atoms.

In one example of the present invention, R₃ to R₁₀ are the same or different from each other, each independently selected from hydrogen; amine groups; substituted or unsubstituted alkyl groups having 1 to 10 carbon atoms; substituted or unsubstituted alkenyl groups having 2 to 10 carbon atoms; substituted or unsubstituted alkynyl groups having 2 to 10 carbon atoms; substituted or unsubstituted aryl groups having 6 to 10 carbon atoms; substituted or unsubstituted alkylamine groups having 1 to 10 carbon atoms; substituted or unsubstituted alkenylamine groups having 2 to 10 carbon atoms; substituted or unsubstituted alkynylamine groups having 2 to 10 carbon atoms; and substituted or unsubstituted arylamine groups having 6 to 10 carbon atoms.

In one example of the present invention, R₃ to R₁₀ may be the same or different from each other, each independently selected from the group consisting of hydrogen; amine groups; substituted or unsubstituted alkyl groups having 1 to 10 carbon atoms, and substituted or unsubstituted alkylamine groups having 1 to 10 carbon atoms.

In one example of the present invention, the compound represented by Chemical Formula 3 comprises at least one amine group, wherein the amine group is substituted at a position where a positive charge located on the sulfur (S) atom in a resonance structure of the compound can be located on the nitrogen atom of the amine group.

The amine group is not particularly limited as long as it is substituted in such a way that the positive charge located on the sulfur (S) atom can be located on the nitrogen atom of the amine group, and may be an amine group substituted with an alkyl group having 1 to 10 carbon atoms; an alkenyl group having 2 to 10 carbon atoms; an alkynyl group having 2 to 10 carbon atoms; an aryl group having 6 to 20 carbon atoms; or may be a substituted or unsubstituted alkylamine group having 1 to 10 carbon atoms; a substituted or unsubstituted alkenylamine group having 2 to 10 carbon atoms; a substituted or unsubstituted alkynylamine group having 2 to 10 carbon atoms; or a substituted or unsubstituted arylamine group having 6 to 20 carbon atoms.

In one example of the present invention, the cationic compound may be selected from the group consisting of, for example, basic blue 9, basic blue 17, basic blue 24, azure A, azure B, azure C, janus green B, and combinations thereof, but is not limited thereto as long as it has a thiazine structure in the molecular structure, and a cationic compound which can improve the dispersibility of the conductor.

### (3) Dispersion medium

The dispersion medium of the conductor dispersed solution according to one example of the present invention is a dispersion medium for dispersing the carbon-based conductor and the dispersant, which is used to pre-disperse the carbon-based conductor in the powder state in order to prevent agglomeration when this material is used directly in the preparation of the electrode slurry composition.

The dispersion medium is capable of dissolving or dispersing the conductor, the first dispersant and the second dispersant to a certain level.

In one example of the present invention, the dispersion medium comprises a nonaqueous polar solvent.

In one example of the present invention, the dispersion medium comprises a nonaqueous polar solvent comprising nitrogen atoms.

In one example of the present invention, the dispersion medium comprises a nonaqueous polar solvent comprising one selected from the group consisting of cyano groups, amine groups, and amide groups.

The dispersion medium may be at least one selected from the group consisting of, for example, dimethylformamide (DMF), acetonitrile, dimethylacetamide (DMAc), N,N-dimethylpropionamide (DMPA), N-methylformamide (NMF), formamide, N,N-diethylformamide (DEF), 2-pyrrolidone, N-methyl-2-pyrrolidone (NMP), N-ethyl-2-pyrrolidone (NEP), ε-caprolactam, benzonitrile, propionitrile, and butyronitrile, but is not limited thereto.

The dispersion medium may be included at a content that enables the electrode slurry composition to have a suitable viscosity, considering the coating of the electrode slurry composition subsequently prepared using the conductor dispersed solution.

### (4) Conductor dispersed solution

The present invention provides a conductor dispersed solution.

In one example of the present invention, the conductor dispersed solution comprises the carbon-based conductor, the dispersant, and the dispersion medium.

The conductor dispersed solution of the present invention comprising the above components has excellent dispersibility and reduced viscosity of the dispersed solution, and suppresses the increase in viscosity over time.

In one example of the present invention, the conductor dispersed solution has an initial viscosity of 1 Pa·s to 12 Pa·s measured at 25°C, 1 rpm using a viscometer (viscometer TV-25, Rotor Code 01, manufactured by TOKI SANGYO). Specifically, the viscosity may be 1 Pa·s or more, 2 Pa·s or more, 3 Pa·s or more, 4 Pa·s or more, 5 Pa·s or more, 6 Pa·s or more, 6.5 Pa·s or more, 7 Pa·s or more, 8 Pa·s or more, or 9 Pa·s or more, may be 12 Pa·s or less, 11.5 Pa·s or less, 11 Pa·s or less, or 10 Pa·s or less, or may be 1 Pa·s to 12 Pa·s, 5 Pa·s to 12 Pa·s, or 6 Pa·s to 12 Pa·s. When the viscosity satisfies the above ranges, the conductor can be evenly distributed in the dispersed solution, thereby facilitating the use of the dispersed solution in preparing an electrode slurry composition.

In one example of the present invention, the conductor dispersed solution has a viscosity increase rate of 0.1% to 18%, represented by the following formula (1), after leaving the dispersed solution at 25°C for 1 week. Specifically, the viscosity increase rate may be 0.1% or more, 0.5% or more, 1% or more, 2% or more, 3% or more, 4% or more, 5% or more, 6% or more, 7% or more, 8% or more, 9% or more, 10% or more, 11% or more, or 12% or more, may be 18% or less, 17% or less, 16% or less, 15% or less, 14% or less, or may be 13% or less, 0.1% to 18%, 3% to 18%, or 5% to 15%. When the viscosity increase rate satisfies the above ranges, the conductor can maintain a stable dispersion state in the dispersed solution. $Viscosity increase rate \left(%\right) = \left[\left\{P-Q\right\}/Q\right] \times 100 ,$ wherein P is the viscosity (Pa·s) measured after leaving the dispersed solution at 25°C for 1 week, Q is the initial viscosity (Pa·s), and both P and Q are measured at 25°C, 1 rpm.

### Method for preparing a conductor dispersed solution

The present invention provides a method of preparing a conductor dispersed solution.

In one example of the present invention, the method is a method of preparing a conductor dispersed solution as described above.

In one example of the present invention, a method of preparing a conductor dispersed solution comprises the steps of (1) mixing a carbon-based conductor, a first dispersant, a second dispersant, and a dispersion medium to prepare a primary dispersed solution of the conductor; and (2) dispersing the primary dispersed solution of the conductor to prepare a secondary dispersed solution of the conductor.

In step (1), a mixture is first prepared by mixing a first dispersant, a second dispersant, and a dispersion medium.

In step (1), a primary dispersed solution of the conductor is prepared by subsequently mixing the conductor into the mixture.

In one example of the present invention, the mixing to prepare the primary dispersed solution of the conductor may be performed by conventional mixing methods, more particularly, by a mixing device such as a Pony mixer, a Change-can mixer, a Hobert mixer, a planetary mixer, a butterfly mixer, a stone mill, a homogenizer, a bead mill, a ball mill, a basket mill, an attrition mill, an all-round stirrer, a clear mixer, or a TK mixer, and may include the step of mixing at a rotational speed of 300 rpm to 10,000 rpm for 30 minutes to 7 hours.

In one example of the present invention, a cavitation dispersion treatment may be performed to increase the miscibility of the carbon-based conductor and the dispersion medium, or the dispersibility of the conductor in the dispersion medium, during mixing to prepare the primary dispersed solution of the conductor. The cavitation dispersion treatment is a dispersion treatment method using shock waves generated by the rupture of vacuum bubbles in water when high energy is applied to the liquid, and the dispersion can be performed without damaging the characteristics of the conductor by this method. Specifically, the cavitation dispersion may be performed by ultrasonication, jet mill, or shear dispersion.

In one example of the present invention, the step of preparing the primary dispersed solution of the conductor may be performed under temperature conditions such that the properties, including viscosity, of the mixture do not change due to evaporation of the dispersion medium. For example, it may be performed at a temperature of 50°C or less, more specifically, 5°C to 50°C.

In step (2), a secondary dispersed solution of the conductor is prepared by dispersing the primary dispersed solution of the conductor.

In one example of the present invention, the process of preparing the secondary dispersed solution of the conductor may be performed by a ball mill, a bead mill, a disc mill or a basket mill, a high pressure homogenizer, or the like. More specifically, it can be performed by a dispersion method using a bead mill or a high pressure homogenizer.

In one example of the present invention, when milling by the disk mill or bead mill, the size of the beads can be suitably determined by the type and amount of carbon nanotubes and the type of dispersant. Specifically, the beads may have a diameter of 0.1 mm to 5 mm, more specifically 0.5 mm to 4 mm. Further, the bead milling process may be performed at a speed of 1,000 rpm to 10,000 rpm, more specifically, 2,000 rpm to 9,000 rpm.

The milling by the high pressure homogenizer may be performed, for example, by pressurizing the mixture with a plunger pump of the high pressure homogenizer, and forcing it through a gap of a homogenizing valve, during which the mixture is subjected to forces such as cavitation, shear, impact or explosion.

In one example of the present invention, the dispersion process may be carried out according to the degree of dispersion of the conductor dispersed solution. Specifically, the process may be performed under a pressure of 5,000 psi to 30,000 psi, for 30 minutes to 120 minutes, more specifically, 60 minutes to 90 minutes, and may be repeated 1 to 10 times.

In one example of the present invention, the step (2) comprises a high-pressure dispersion process.

In one example of the present invention, a conductor dispersed solution refers to the secondary dispersed solution of the conductor.

### Electrode slurry composition for lithium secondary batteries

The present invention also provides an electrode slurry composition for secondary batteries.

In one example of the present invention, the electrode slurry composition for secondary batteries comprises the conductor dispersed solution and an electrode active material.

In one example of the present invention, the electrode slurry composition for lithium secondary batteries may be a positive electrode slurry composition or a negative electrode slurry composition, more specifically, a positive electrode slurry composition.

In one example of the present invention, the electrode slurry composition for lithium secondary batteries may comprise a conductor dispersed solution, a positive electrode active material or a negative electrode active material as an electrode active material, a binder, and a solvent and/or other additives as needed.

In one example of the present invention, the positive electrode active material is not specifically limited as long as it is a positive electrode active material well known in the art, for example, lithium cobalt oxide, lithium nickel oxide, lithium manganese oxide, lithium iron phosphate, lithium nickel manganese cobalt oxide, or combinations thereof. Specifically, examples of the positive electrode active material may include LiCoO₂, LiNiO₂, LiMn₂O₄, LiCoPO₄, LiFePO₄ and LiNiₐMn_{b}Co_{c}O₂ (wherein 0 < a, b, c < 1), but are not limited thereto.

In one example of the present invention, the negative electrode active material may be one or more negative electrode active materials selected from the group consisting of natural graphite, artificial graphite, carbonaceous materials; lithium-containing titanium composite oxide (LTO), a metal (Me) that is Si, Sn, Li, Zn, Mg, Cd, Ce, Ni or Fe; an alloy of the above metal (Me); an oxide (MeOₓ) of the above metal (Me); and a complex of the above metal (Me) with carbon. The negative electrode active material may be comprised in an amount of 60% by weight to 98% by weight, more preferably 70% by weight to 98% by weight, based on the total weight of solids excluding the solvent from the negative electrode slurry.

In one example of the present invention, the binder is a component that aids in the binding of the active material and the conductor, and the binding to the current collector, and is typically added in an amount of 1% by weight to 30% by weight based on the total weight of the mixture comprising the electrode active material. Examples of this binder may include polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrenebutadiene rubber, fluororubber, and various copolymers thereof.

In one example of the present invention, the solvent may include an organic solvent such as N-methyl pyrrolidone (NMP), dimethyl formamide (DMF), acetone or dimethyl acetamide, or water, which may be used alone or in a mixture of two or more of the foregoing. The amount of solvent used is sufficient to dissolve and disperse the electrode active material, binder, and conductor, taking into account the application thickness of the slurry and the manufacturing yield.

In one example of the present invention, the viscosity adjuster may be carboxymethylcellulose, or polyacrylic acid, or the like, and by this addition, the viscosity of the electrode slurry may be adjusted to facilitate the preparation of the electrode slurry and the application process on the electrode current collector.

In one example of the present invention, the filler is optionally used as a component to inhibit the expansion of the electrode, and is not particularly limited as long as it is a fibrous material that does not cause chemical changes in the battery, for example, an olefin-based polymer such as polyethylene, or polypropylene; a fibrous material such as glass fibers, or carbon fibers.

In one example of the present invention, if the electrode slurry composition is a composition of positive electrode slurry for forming a positive electrode, the positive electrode may be prepared by applying the composition of the positive electrode slurry to a positive electrode current collector followed by drying and calendering. Alternatively, it may be prepared by casting the positive electrode slurry onto a separate support and then laminating the film obtained by peeling it off from the support onto the positive electrode current collector.

In one example of the present invention, the thickness of the positive electrode active material layer formed by the positive electrode slurry may vary depending on the loading amount, or loading speed for applying the positive electrode slurry.

In one example of the present invention, the positive electrode current collector has a thickness of 3 µm to 500 µm. This positive electrode current collector is not particularly limited as long as it has a high conductivity without causing chemical changes in the battery. For example, stainless steel, aluminum, nickel, titanium, calcined carbon, or aluminum or stainless steel whose surface is treated with carbon, nickel, titanium, or silver may be used. Also, the positive electrode current collector may form microscopic irregularities on its surface to strengthen the binding of the positive electrode active material, and various forms, such as a film, sheet, foil, net, porous material, foam, or nonwoven material, may be used.

In one example of the present invention, if the electrode slurry composition is a composition of negative electrode slurry for forming a negative electrode, the negative electrode may be prepared by applying the composition of the negative electrode slurry to a negative electrode current collector followed by drying and calendering. Alternatively, it may be prepared by casting the negative electrode slurry onto a separate support and then laminating the film obtained by peeling it off from the support onto the negative electrode current collector.

In one example of the present invention, the thickness of the negative electrode active material layer formed by the negative electrode slurry may vary depending on the loading amount, or loading speed for applying the negative electrode slurry.

In one example of the present invention, the negative electrode current collector has a thickness of 3 µm to 500 µm. The negative electrode current collector is not particularly limited as long as it has a high conductivity without causing chemical changes in the battery, for example, copper, stainless steel, aluminum, nickel, titanium, calcined carbon, copper or stainless steel whose surface is treated with carbon, nickel, titanium, or silver, or aluminum-cadmium alloy may be used. Also, similar to the positive electrode current collector, the negative electrode current collector may form microscopic irregularities on its surface to strengthen the binding of the negative electrode active material, and various forms, such as a film, sheet, foil, net, porous material, foam, or nonwoven material, may be used.

### Lithium secondary battery

The present invention provides a lithium secondary battery.

In one example of the present invention, the lithium secondary battery includes the positive electrode described above; a negative electrode; a separator interposed between the positive electrode and the negative electrode; and an electrolyte. The positive electrode and negative electrode are the same as described above, so specific descriptions thereon are omitted.

The separator separates the negative electrode and the positive electrode and provides a pathway for lithium ion migration, and is not particularly limited as long as it is a material generally used as a separator in a lithium secondary battery, and it preferably exhibits a low resistance to ion migration of the electrolyte and an excellent wettability with the electrolyte. Specifically, a porous polymeric film, e.g., a porous polymeric film made of a polyolefin-based polymer such as an ethylene homopolymer, a propylene homopolymer, an ethylene/butene copolymer, an ethylene/hexene copolymer, or an ethylene/methacrylate copolymer, or a multilayer structure comprising two or more layers thereof, may be used. Also, conventional porous nonwovens may be used, for example, nonwovens made of a glass fiber having a high melting point or a polyethylene terephthalate fiber. In addition, a coated separator containing ceramic components or polymeric materials for heat resistance or mechanical strength may be used, optionally in a single-layer or multi-layer structure.

In one example of the present invention, the electrolyte may include, but is not limited to, an organic liquid electrolyte, an inorganic liquid electrolyte, a solid polymeric electrolyte, a gel-like polymeric electrolyte, a solid inorganic electrolyte, a molten inorganic electrolyte, and the like that can be used in the manufacture of lithium secondary batteries. Specifically, the electrolyte may comprise an organic solvent and a lithium salt.

In one example of the present invention, the organic solvent may be used without any particular limitation as long as it can serve as a medium through which the ions involved in the electrochemical reactions of the battery can move. Specifically, the organic solvent may include ester-based solvents such as methyl acetate, ethyl acetate, γ-butyrolactone, or ε-caprolactone; ether-based solvents, such as dibutyl ether or tetrahydrofuran; ketone-based solvents, such as cyclohexanone; aromatic hydrocarbon-based solvents, such as benzene or fluorobenzene; carbonate-based solvents, such as dimethylcarbonate (DMC), diethylcarbonate (DEC), methylethylcarbonate (MEC), ethylmethylcarbonate (EMC), ethylenecarbonate (EC), or propylene carbonate (PC); alcohol-based solvents, such as ethyl alcohol, or isopropyl alcohol; nitriles, such as R-CN (where R is a straight-chain, branched, or cyclic hydrocarbon group having 2 to 20 carbon atoms, which may contain an unsaturated ring or an ether linkage); amides, such as dimethylformamide; dioxolanes, such as 1,3-dioxolane; or sulfolanes. Among them, carbonate-based solvents are preferred, and a mixture of cyclic carbonate (e.g., ethylene carbonate or propylene carbonate) having high ionic conductivity and high dielectric constant that can improve the charge and discharge performance of the battery and a linear carbonate-based compound (e.g., ethylmethylcarbonate, dimethylcarbonate, or diethylcarbonate) having low viscosity is more preferred. In this case, the cyclic carbonate and the chain carbonate are preferably mixed at a volume ratio of about 1:1 to about 1:9, whereby the electrolyte can exhibit improved performance of the electrolyte.

In one example of the present invention, the lithium salt may be used without particular limitation as long as it is a compound capable of providing lithium ions for use in a lithium secondary battery. Specifically, the lithium salt may be LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably within the range of 0.1 M to 2.0 M. When the concentration of lithium salt falls under the above range, the electrolyte has appropriate conductivity and viscosity, so that it can exhibit good electrolyte performance, and the lithium ions can move effectively.

In one example of the present invention, in addition to the above electrolyte components, the electrolyte may contain one or more additives, for example, haloalkylenecarbonate-based compounds such as difluoroethylenecarbonate, pyridine, triethylphosphite, triethanolamine, cyclic ethers, ethylene diamine, n-glyme, hexanoic acid triamides, nitrobenzene derivatives, sulfur, quinonimine dyes, N-substituted oxazolidinones, N,N-substituted imidazolidines, ethylene glycol dialkyl ethers, ammonium salts, pyrrole, 2-methoxyethanol or aluminum trichloride, for the purpose of improving the lifetime characteristics of the battery, inhibiting the reduction of the cell capacity, improving the discharge capacity of the battery. The additive may be comprised in an amount of 0.1% by weight to 5% by weight based on the total weight of the electrolyte.

In one example of the present invention, a lithium secondary battery comprises an electrode prepared using a conductor dispersed solution according to the present invention, specifically, a negative electrode prepared using a conductor dispersed solution. A lithium secondary battery comprising an electrode prepared using a conductor dispersed solution according to the present invention, more particularly, a lithium secondary battery comprising a negative electrode prepared using a conductor dispersed solution, can stably exhibit excellent discharge capacity and output characteristics because the conductor is uniformly dispersed in the positive electrode, and thus the content of the conductor can be reduced. As a result, it is useful in portable devices such as cell phones, laptop computers, digital cameras, and in electric vehicles such as hybrid electric vehicles (HEVs).

Accordingly, according to another example of the present invention, there is provided the lithium secondary battery, a battery module comprising the lithium secondary battery as a unit cell and a battery pack comprising same.

The battery module or battery pack may be utilized as a power of one or more of the following medium- to large-sized devices: a power tool; an electric vehicle, including an electric vehicle (EV), a hybrid electric vehicle, and a plug-in hybrid electric vehicle (PHEV); or a system for storing power.

### [Mode for Practicing the Invention]

Specific examples of the present invention are described below. However, the examples described below are intended only to specifically illustrate or describe the present invention and are not intended to limit the present invention. Furthermore, any matter not described herein can be sufficiently inferred by a person skilled in the art, and is hereby omitted.

### Examples

### <Example 1>

### (1) Preparing a primary dispersed solution of the conductor

6.0 g (1.2% by weight in the dispersed solution) of polyvinylidene fluoride (PVdF) (Solvay, Solef5130) as a first dispersant comprising a vinyl-based polymer containing halogen atoms, 2.0 g (0.4% by weight in the dispersed solution) of basic blue 9 (manufactured by Sigma-Aldrich) as a second dispersant comprising a cationic compound having a thiazine structure, and 488 g of N-Methyl-2-pyrrolidone (NMP) (manufactured by Daejung Chemicals) as a dispersion medium were mixed to prepare 496 g of mixed solution, and the solution was placed in a dissolver (Dispermat-CA, manufactured by VMA-GETZMANN) equipped with an impeller and a container and mixed by stirring at 400 rpm for 10 minutes.

To this mixture, an additional 4.0 g (0.8% by weight in the dispersed solution) of single-walled carbon nanotubes (SWCNTs, TUBALL, manufactured by OCSiAl) having a specific surface area of 1,160 m²/g as a conductor was added and stirred at 8,000 rpm for 60 minutes to prepare a total of 500 g of a primary dispersed solution of the conductor.

### (2) Preparing a conductor dispersed solution

The above primary dispersed solution of the conductor was homogenized 10 times at a pressure of 20,000 psi using a high pressure disperser (PICOMAX, manufactured by Micronox) to prepare a conductor dispersed solution.

### <Example 2>

The conductor dispersed solution was prepared in the same manner as in Example 1 above, except that a polyvinylidene fluoride-hexafluoropropylene copolymer (PVdF-co-HFP) (Ultraflex B, manufactured by Arkema) was mixed as a first dispersant.

### <Example 3>

The conductor dispersed solution was prepared in the same manner as in Example 1 above, except that a second dispersant was mixed in an amount of 0.6% by weight.

### <Example 4>

The conductor dispersed solution was prepared in the same manner as in Example 1 above, except that the first dispersant was mixed in an amount of 1.6% by weight.

### <Example 5>

The conductor dispersed solution was prepared in the same manner as in Example 1 above, except that the second dispersant was mixed in an amount of 0.8% by weight.

### <Example 6>

The conductor dispersed solution was prepared in the same manner as in Example 1 above, except that basic blue 17 (manufactured by Sigma-Aldrich) was used as a second dispersant.

### <Example 7>

The conductor dispersed solution was prepared in the same manner as in Example 1 above, except that Azure A (manufactured by Sigma-Aldrich) was used as a second dispersant.

### <Comparative Example 1>

A conductor dispersed solution was prepared in the same manner as in Example 1 above, except that 0.6% by weight of the conductor, and 3% by weight of the polyvinylidene fluoride-hexafluoropropylene copolymer (PVdF-co-HFP) as a first dispersant were mixed, and no second dispersant was added.

### <Comparative Example 2>

The conductor dispersed solution was prepared in the same manner as in Comparative Example 1 above, except that 2% by weight of the first dispersant and 1% by weight of polyvinylpyrrolidone (PVP) as the second dispersant were mixed.

### <Comparative Example 3>

The conductor dispersed solution was prepared in the same manner as in Example 1 above, except that 1.5% by weight of the first dispersant and 0.1% by weight of the second dispersant were mixed.

### <Comparative Example 4>

The conductor dispersed solution was prepared in the same manner as in Example 1 above, except that 0.8% by weight of the first dispersant and 0.8% by weight of the second dispersant were mixed.

### <Comparative Example 5>

The conductor dispersed solution was prepared in the same manner as in Example 1, except that the first dispersant was not included, and 0.6% by weight of the conductor and 3% by weight of the second dispersant were mixed.

### <Comparative Example 6>

The conductor dispersed solution was prepared in the same manner as in Example 1, except that water was added as a dispersion medium.

### Experimental Example

The viscosity of the conductor dispersed solutions prepared by the above examples and comparative examples was measured by measuring the initial viscosity at 25°C, 1 rpm using a viscometer (viscometer TV-25, Rotor Code 01, manufactured by TOKI SANGYO), and then measuring again same after leaving the dispersed solution at 25°C for 1 week. The initial viscosity and the viscosity after 1 week are shown in Table 1 below.

The viscosity increase rate was calculated using Formula (1) below. $Viscosity increase rate \left(%\right) = \left[\left\{P-Q\right\}/Q\right] \times 100 ,$ wherein P is the viscosity (Pa·s) measured after leaving the dispersed solution at 25°C for 1 week, Q is the initial viscosity (Pa·s), and both P and Q are measured at 25°C, 1 rpm.

**[Table 1]**

| | Second dispersant content (based on 100 parts by weight of the first dispersant) | Initial viscosity (Pa·s) | Viscosity after 1 week (Pa·s) | Viscosity increase rate (%) |
|---|---|---|---|---|
| Example 1 | 33 | 9.4 | 10.8 | 15 |
| Example 2 | 33 | 8.0 | 9.0 | 13 |
| Example 3 | 50 | 8.7 | 9.5 | 9 |
| Example 4 | 25 | 9.8 | 11.0 | 12 |
| Example 5 | 67 | 8.8 | 9.9 | 13 |
| Example 6 | 33 | 8.5 | 9.8 | 15 |
| Example 7 | 33 | 9.1 | 10.4 | 14 |
| Comparative Example 1 | - | 11.0 | 16.4 | 49 |
| Comparative Example 2 | 50 | 10.9 | 13.0 | 19 |
| Comparative Example 3 | 6.7 | 12.8 | 16.7 | 30 |
| Comparative Example 4 | 100 | 13.3 | 17.1 | 29 |
| Comparative Example 5 | - | 10.0 | 18.2 | 82 |
| Comparative Example 6 | 33 | Unmeasurable | Unmeasurable | - |

As shown in Table 1 above, it can be seen that the dispersed solutions of Examples 1 to 7, which include a first dispersant comprising a vinyl-based polymer containing halogen atoms and a second dispersant comprising a cationic compound having a thiazine structure in the conductor dispersed solution, exhibit a low initial viscosity.

In particular, for the dispersed solutions of Comparative Example 1, which does not include a second dispersant, Comparative Example 2, which includes a second dispersant that does not include a cationic compound having a thiazine structure, and Comparative Example 5, which does not include a first dispersant, the initial viscosity was not high, but the viscosity increase rate of the dispersed solutions which increased compared to the dispersed solutions of Examples 1 to 7 shows that the viscosity increase over time of the dispersed solutions of Examples 1 to 7 was very effectively suppressed.

Furthermore, it can be seen that the dispersed solutions of Comparative Examples 3 and 4, which include a first dispersant comprising a vinyl-based polymer containing halogen atoms and a second dispersant comprising a cationic compound having a thiazine structure in the conductor dispersed solution, wherein the content of the second dispersant falls outside the range of 10 to 90 parts by weight relative to 100 parts by weight of the first dispersant, exhibit a higher initial viscosity and viscosity increase rate compared to the dispersed solutions of Examples 1 to 7, wherein the weight ratio falls under the range of 10 to 90 parts by weight.

The dispersed solution of Comparative Example 6, which used a water-based solvent, exhibited a viscosity which was unsuitable for use in a slurry to such an extent that measurement was impossible.

Therefore, it can be seen that a dispersed solution comprising a first dispersant comprising a vinyl-based polymer containing halogen atoms and a second dispersant comprising a cationic compound having a thiazine structure can effectively disperse the conductor, thereby exhibiting a low initial viscosity, so that the increase in viscosity over time can be suppressed, and if the content of the second dispersant is in the range of 10 to 90 parts by weight relative to 100 parts by weight of the first dispersant, the above effects can be further improved. It can also be seen that the dispersion effect described above can be effective when a non-aqueous solvent is mixed as a dispersion medium.

While preferred examples of the present invention have been described in detail above, the scope of the invention is not limited thereto, and various modifications and improvements by those skilled in the art utilizing the basic concepts of the invention as defined by the following claims are also within the scope of the invention.

## Claims

1. A conductor dispersed solution comprising a carbon-based conductor;
a first dispersant comprising a vinyl-based polymer containing halogen atoms;
a second dispersant comprising a cationic compound having a thiazine structure; and
a dispersion medium.

2. The conductor dispersed solution according to claim 1,
wherein the cationic compound is represented by any of the following Chemical formulae 1 and 2: 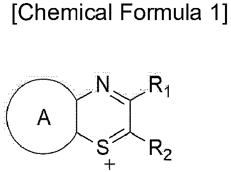 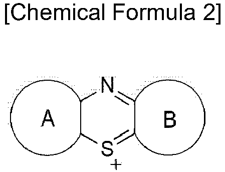
wherein rings A and B are be the same or different from each other, each independently selected from the group consisting of substituted or unsubstituted aryl groups having 6 to 20 carbon atoms, and substituted or unsubstituted heteroaryl groups having 6 to 20 carbon atoms,
R₁ and R₂ are the same or different from each other, each independently selected from hydrogen; halogen; cyano groups; sulfonate groups; hydroxyl groups; amine groups; substituted or unsubstituted alkyl groups having 1 to 10 carbon atoms; substituted or unsubstituted alkenyl groups having 2 to 10 carbon atoms; substituted or unsubstituted alkynyl groups having 2 to 10 carbon atoms; substituted or unsubstituted alkoxy groups having 1 to 10 carbon atoms; substituted or unsubstituted aryl groups having 6 to 20 carbon atoms; substituted or unsubstituted alkylamine groups having 1 to 10 carbon atoms; substituted or unsubstituted alkenylamine groups having 2 to 10 carbon atoms; substituted or unsubstituted alkynylamine groups having 2 to 10 carbon atoms; and substituted or unsubstituted arylamine groups having 6 to 20 carbon atoms.

3. The conductor dispersed solution according to claim 1,
wherein the cationic compound is represented by Chemical Formula 3 below, 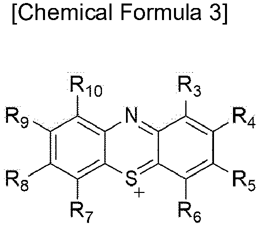
wherein R₃ to R₁₀ are the same or different from each other, each independently selected from hydrogen; halogen; cyano groups; sulfonate groups; hydroxyl groups; amine groups; substituted or unsubstituted alkyl groups having 1 to 10 carbon atoms; substituted or unsubstituted alkenyl groups having 2 to 10 carbon atoms; substituted or unsubstituted alkynyl groups having 2 to 10 carbon atoms; substituted or unsubstituted alkoxy groups having 1 to 10 carbon atoms; substituted or unsubstituted aryl groups having 6 to 20 carbon atoms; substituted or unsubstituted alkylamine groups having 1 to 10 carbon atoms; substituted or unsubstituted alkenylamine groups having 2 to 10 carbon atoms; substituted or unsubstituted alkynylamine groups having 2 to 10 carbon atoms; and substituted or unsubstituted arylamine groups having 6 to 20 carbon atoms.

4. The conductor dispersed solution according to claim 2,
wherein the compound represented by any of the above chemical formulae 1 and 2 comprises at least one amine group,
wherein the amine group is substituted at a position where a positive charge located on the sulfur (S) atom in a resonance structure of the compound can be located on the nitrogen atom of the amine group.

5. The conductor dispersed solution according to claim 1,
wherein the content of the conductor in the dispersed solution is 0.05% by weight to 5% by weight based on the total weight of the dispersed solution.

6. The conductor dispersed solution according to claim 1,
wherein the content of the first dispersant is 80 parts by weight to 450 parts by weight based on 100 parts by weight of the conductor.

7. The conductor dispersed solution according to claim 1,
wherein the content of the second dispersant is 10 parts by weight to 150 parts by weight based on 100 parts by weight of the conductor.

8. The conductor dispersed solution according to claim 1,
wherein the content of the second dispersant is 10 parts by weight to 90 parts by weight based on 100 parts by weight of the first dispersant.

9. The conductor dispersed solution according to claim 1,
wherein the conductor dispersed solution has an initial viscosity of 1 Pa·s to 12 Pa·s as measured at 25°C, 1 rpm.

10. The conductor dispersed solution according to claim 1,
wherein the conductor dispersed solution has a viscosity increase rate of 0.1% to 18%, represented by the following formula (1), $Viscosity increase rate \left(%\right) = \left[\left\{P-Q\right\}/Q\right] \times 100 ,$
wherein P is the viscosity (Pa·s) measured after leaving the dispersed solution at 25°C for 1 week, Q is the initial viscosity (Pa·s), and both P and Q are measured at 25°C, 1 rpm.

11. The conductor dispersed solution according to claim 1,
wherein the conductor comprises a material selected from the group consisting of carbon nanotubes, carbon black, and a combination thereof.

12. The conductor dispersed solution according to claim 1,
wherein the vinyl-based polymer comprising halogen atoms is selected from the group consisting of polyvinyl fluoride, polyvinylidene fluoride, polyvinylidene fluoride-hexafluoropropylene copolymer, polytetrafluoroethylene, polyethylene tetrafluoroethylene, polychlorotrifluoroethylene, polyethylene chlorotrifluoroethylene, polyvinyl chloride, and combinations thereof.

13. The conductor dispersed solution according to claim 1,
wherein the dispersion medium comprises a non-aqueous polar solvent.

14. A method of preparing a conductor dispersed solution according to claim 1, comprising:
(1) mixing a carbon-based conductor, a first dispersant, a second dispersant, and a dispersion medium to prepare a primary dispersed solution of the conductor; and
(2) dispersing the primary dispersed solution of the conductor to prepare a secondary dispersed solution of the conductor.

15. The method of preparing a conductor dispersed solution according to claim 14,
wherein the step (2) comprises a high-pressure dispersion process.
